# EUROPÄISCHE PATENTSCHRIFT

(11) **EP 1 958 975 B1**
(45) Veröffentlichungstag und Bekanntmachung des Hinweises auf die Patenterteilung: **20.07.2011**
(21) Anmeldenummer: 07101841.0
(22) Anmeldetag: 06.02.2007
(51) Int. Cl.: C08G 18/10, C09J 175/00

(54) **Zwei-Komponenten Klebstoff**
Dual component glue
Colle à deux composants

(43) Veröffentlichungstag der Anmeldung: 20.08.2008
(73) Patentinhaber: nolax AG, 6203 Sempach Station (CH)
(72) Erfinder: Rasche, Alfred, 41539, Dormagen (DE); Baron, Catherine, 68890, Meyenheim (FR); Leuthard, Fabian, 5634, Merenschwand (CH); Ferrand, Damien, 68150, Sierentz (FR); Huber, Karl, 6206, Neuenkirch (CH); Schulthess, Adrian, 1734, Tentlingen (CH)
(74) Vertreter: Hepp Wenger Ryffel AG

(56) Entgegenhaltungen:
- US-A- 4 743 672
- US-A- 5 584 958

## Beschreibung

Die Erfindung betrifft einen Zweikomponenten-Klebstoff zur Verklebung von Holzwerkstoffen.

In jüngster Zeit werden häufig Polyurethan-Klebstoffe zur Verklebung von Holzwerkstoffen eingesetzt, insbesondere auch im tragenden Holzleimbau (Ingenieur-Holzbau) wie bspw. zur Fertigung von Bauelementen (Brettschichtträger, Wandelemente, etc.). Hierbei kommen sowohl zweikomponentige wie auch einkomponentige, feuchtigkeitshärtende Systeme zum Einsatz. Bei letzteren findet nach dem Klebstoffauftrag eine Vorreaktion zwischen Isocyanaten und Feuchtigkeit aus der Umgebungsluft oder dem Substrat statt: Aus einem Teil des eingesetzten Isocyanats wird unter Abspaltung von Kohlendioxid das entsprechende Amin gebildet, welches anschliessend mit Isocyanat unter Abspaltung von CO₂ zu einer Harnstoffbindung abreagiert.

Die Reaktion von aromatischen Isocyanaten und Hydroxylgruppen (aus Wasser oder Alkohlen) ist um Grössenordnungen schneller als die entsprechende Reaktion aliphatischer Isocyanate. Aromatische Isocyanate sind jedoch aufgrund des aromatischen Systems oxidationsanfällig und intrinsisch weniger lichtecht. Zudem ist die Urethanreaktion in manchen Anwendungen noch nicht ausreichend schnell, bspw. für Massenfertigungen von Fügeteilen mit hohem Durchsatz. Einkomponentigen Systemen sind bezüglich Beschleunigung ohnehin Grenzen gesetzt. Zum einen ist die Diffusion der Wassermoleküle aus dem Substrat oder aus der Luft oftmals geschwindigkeitsbestimmend. Zum anderen tendieren stark beschleunigte Formulierung zu Schaumbildung, weil das gebildete CO₂ eingeschlossen bleibt. Bei vielen Anwendungen, vor allem im Aussenbereich, sind zudem hohe Wärme- und Wasserfestigkeiten erforderlich.

Die Dokumente US 5,584,958 und US 4,743,672 beschreiben 2K-Polyurethan-Klebstoffe, die geringe Anteile eines oder mehrerer Amine enthalten.

Es ist daher eine Aufgabe der vorliegenden Erfindung, die Nachteile des bekannten zu vermeiden, insbesondere also einen Zwei-Komponenten Klebstoff zur Verklebung von Holzklebstoffen bereitzustellen, mit welchem sehr rasch belastbare Verbindungen erzielt werden können, wobei der resultierende Verbund zumindest ähnliche wenn nicht gar bessere Festigkeitseigenschaften aufweist als von den vorstehend diskutierten Polyurethan-Klebstoffen bekannt. Zudem soll der Zwei-Komponenten Klebstoff möglichst lichtecht sein.

Diese Aufgabe wird durch die Gegenstände der unabhängigen Patentansprüche gelöst.

Ein erfindungsgemässer Zwei-Komponenten Klebstoff zur Verklebung von Holzwerkstoffen umfasst eine isocyanathaltige Komponente A und eine aminhaltige Komponente B. Die Komponente A enthält hierbei ein Isocyanat-terminiertes Präpolymer oder Präpolymergemisch mit einer Isocyanat-Funktionalität von ≥ 1,7, vorzugsweise von 1,7 < f_{NCO} < 3, besonders bevorzugt im Bereich von 2 bis 3. Besonders bevorzugt ist das Isocyanat-terminierte Präpolymer oder Präpolymergemisch bei Raumtemperatur (20°C) flüssig oder pastös, jedenfalls nicht fest. Der Isocyanatgehalt des Präpolymers beträgt insbesondere 6 Gew.% bis 33 Gew.%, vorzugsweise 8 Gew.% bis 25 Gew.%, besonders bevorzugt 12 Gew.% bis 18 Gew.%. Die Komponente B enthält wenigstens ein Di-und/oder Polyamin, vorzugsweise ein Polyetherdiamin und/oder Polyetherpolyamin. Besonders bevorzugt ist die Komponente B, insbesondere das Di- und/oder Polyamin bei Raumtemperatur (20°C) flüssig oder pastös, jedenfalls nicht fest. Weiter bevorzugt weist die Komponente B im wesentlichen keine Hydroxylgruppen auf.

Es wird somit ein Zwei-Komponenten Klebstoff bereitgestellt, bei welchem die Vernetzung des isocyanathaltigen Präpolymeren der Komponente A durch systematisch in der Komponente B bereitgestellte Amine bewirkt wird. Hierdurch ergeben sich eine Mehrzahl von Vorteilen gegenüber dem Stand der Technik: (1.) Im Vergleich zu den vorstehend beschriebenen, einkomponentigen Polyurethan-Systemen müssen nicht erst durch Hydrolyse von überschüssigem Isocyanat Amine generiert werden, sondern die Amine werden in Substanz bereitgestellt, was die Reaktion massiv beschleunigt. Die Feuchtegehalte der Substrate und/oder der Luft sind daher nicht relevant für den Verklebungsvorgang. Es können deshalb auch Substrate wie Glas, Metalle, etc. problemlos verklebt werden. Die Abwesenheit von CO₂ wirkt sich ebenfalls positiv auf die Verklebung aus, da kein Gegendruck notwendig ist und auch keine die Kohäsion der Fuge schwächenden Blasen auftreten. (2.) Im Vergleich zu den vorstehend beschriebenen, zweikomponentigen Polyurethan-Systemen können, falls Lichtechtheit gefordert ist, zweckmässig ausschliesslich aliphatische Amine eingesetzt werden, was auch zu einer tendenziell schnelleren Vernetzung unter Ausbildung von Harnstoffbrücken führt. Es ist somit durch die vorliegende Erfindung - ohne Verlust an Schnelligkeit des Reaktionssystems, sondern vielmehr unter Beschleunigung - ermöglicht, auf aromatische Amine, insbesondere Aminobenzoat-haltige Polymere, weitestgehend, vorzugsweise vollständig zu verzichten. Es können bei maschineller Verarbeitung sehr kurze Taktzeiten in der Verklebung erzielt werden. Auch auf die Anwesenheit von Monoaminen kann vollständig verzichtet werden. Ceteris paribus sind wahrscheinlich auf Grund der höheren thermodynamischen Stabilität der Harnstoff- im Vergleich zu der Urethanbindung überraschend auch die Wärmestand- und Wasserfestigkeit erhöht.

In besonders bevorzugten Ausführungsformen handelt es sich bei dem Isocyanat-terminierten Präpolymer oder Präpolymergemisch in Komponente A um ein Polyurethan- oder Polyharnstoff-Präpolymer, ggf. in Abmischung mit weiteren Isocyanaten, bspw. monomeren Diisocyanaten, polymeren Isocyanaten, oder monofunktionellen Isocyanaten. Ggf. kann auch auf die Anwesenheit von Präpolyeren vollständig verzichtet werden und stattdessen die entsprechenden Reaktanten (Di-/Polyisocyanate einerseits und Di-/Polyole und/oder Di-/Polyamine andererseits) zur Erzeugung eines Präpolymeren in der Komponente A enthalten sein. Polyurethanpräpolymere bzw. Polyurethanpräpolmyergemische sind im Rahmen der Erfindung bevorzugt: Hierdurch kann die aus dem vorstehend diskutierten Stand der Technik bekannte, gute Adhäsion von Polyurethan-Zusammensetzungen auf Holzwerkstoffen weiter genutzt werden.

Geeignete Polyurethan- oder Polyharnstoff-Präpolymere und ihre Herstellung sind dem Fachmann an sich bekannt. Im Besonderen werden genannt:

### ISOCYANATE

Polyisocyanate sind essentiell für die Herstellung von Polyurethanen und Polyharnstoffen. Die generelle Summenformel von Polyisocyanaten ist R-(NCO)ₙ, mit n ≥ 2, und wobei R eine aromatische oder aliphatische Gruppe bedeutet. Mit Hydroxylgruppen abreagierende Polyisocyanate bilden Polyurethane, mit Amingruppen abreagierende Polyisocyanate bilden Polyharnstoffe.

Als Polyisocyanate werden bevorzugt Diisocyanate verwendet, besonders bevorzugt ausgewählt aus der Gruppe bestehend aus 4,4'-Methylenebis(phenylisocyanat) (MDI); Toluoldiisocyanat (TDI); m-Xylylendiisocyanate (XDI); Hexamethylendiisocyanate (HDI); Methylen-bis-(4-cyclohexyldiisocyanate) (HDMI); Naphtalin-1,5,-diisocyanate (NDI); 3,3'-Dimethyl-4,4'-biphenyldiisocyanate (TODI); 1,4-Diisocyanatbenzol (PPDI) Phenyl-1,4-4-diisocyanate; Trimethylhexamethyldiisocyanate (TMDI); Isophorondiisocyanate (IPDI); 1,4-Cyclohexyldiisocyanat (CHDI); Diphenylether-4,4'-diisocyanat; p,p'-Diphenyldiisocyanat; Lysindiisocyanate (LDI); 1,3-Bis(isocyanatmethyl)cyclohexan; Polymethylpolyphenylisocyanat (PMDI); und Isomere und/oder Mischungen davon.

Besonders bevorzugt sind MDI und polyMDI Mischungen. Normalerweise enthalten methylenverbrückte Polyphenylpolyisocyanat-Mischungen etwa 20 bis etwa 100 Gewichtsprozent MDI Isomere (typischerweise etwa 20 bis etwa 95 Gewichtsprozent davon entfallen auf das 4,4'-Isomer), wobei der verbleibende Rest von Polymethylenepolyphenylisocyanaten mit höherer Funktionalität (typischerweise etwa zwischen 2.1 und 3.5) und höherem Molekulargewicht gebildet wird. Derartige Isocyanat-Mischungen sind kommerziell erhältlich und/oder können gemäss dem in US 3,362,979 leicht hergestellt werden.

Die Isocyanate können selbstverständlich in Form von höheren Homologen eingesetzt werden, bspw. als Isocyanurat, Carbodiimid, Allophanat, Biuret oder Uretdion.

### PRÄPOLYMERE

### Polyurethan-Präpolymere

Zur Herstellung von Polyurethan-Präpolymeren werden Polyole mit den vorstehend genannten Isocyanaten zur Reaktion gebracht. Geeignete Polyole sind dem Fachmann geläufig. Sie haben im Rahmen der Erfindung typischerweise ein Molekulargewicht von etwa 500 bis etwa 6.000 und/oder zwei bis vier Hydroxylgruppen. Besonders bevorzugte Polyole sind Polyester, Polyether, Polythioether, Polyacetale und Polycarbonate mit jeweils zwei bis vier Hydroxylgruppen. Bevorzugte Polyether im Rahmen der Erfindung sind dem Fachmann an sich bekannt und können bspw. hergestellt werden durch Polymerisierung von Epoxiden wie Ethylenoxid, Propylenoxid, Butylenoxid, Tetrahydrofuran, Styroloxid oder Epichlorhydrin in Gegenwart von BF₃, oder durch Addition von Epoxiden, insbesondere von Ethylenoxid oder Propylenoxid an reaktive Wasserstoffe enthaltende Moleküle wie bspw. Wasser, Alkohol oder Amine (bspw. niedermolekulare Diole, Triole oder Tetrole; 4,4'-Dihydroxydiphenylpropan; Anilin; Ammoniak; Ethanolamin; Ethylendiamin). Polypropylenglykol und Polytetramethylenglykol (PTMG oder PTMEG) sind gegenwärtig bevorzugt.

In der Präpolymer-Herstellung können auch an sich bekannte Kettenverlängerer eingesetzt werden, insbesondere Di-/Polyole von niedrigem Molekulargewicht (typischerweise kleiner als 400g/mol). Genannt werden insbesondere Ethylen glykol, Propylenglykol, Butanglykol, Pentanglykol, Hexanglykol, Benzylglykol, Xylolglykol, Wasser, 1,4-Butandiol, 1,3-Butandiol, 2,3-Dimethyl-2,3-Butandiol, Dipropylenglykol und Tripropylenglycol, Di- und Triethlylenglykol, N-N'-bis-(2-Hydroxy-propylanilin) (DHPA), 1,4-di-(2-Hydroxyethyl)hydrochinon (HQEE), Diethanolamin, Triethanolymin, Trimethylolpropan, Glycerin.

Polyalkenylpolyole, Polyetherpolyole oder Polyesterpolyole oder gemischte Polyesterpolyetherpolyole mit vorzugsweise 2 oder 3 Hydroxylendgruppen können mit einem wohldefinierten Überschuss an Isocyanate zu NCO-terminierten Urethanprepolymeren umgesetzt. Sie sind auch im Handel erhältlich bspw. von der BAYER AG z. B. unter den Handelsmarken Desmodur® E22 oder E23. Destillierte Produkte, bei denen die Entfernung des überschüssigen Diisocyanates zu f_{NCO} = 2 führt, sind ebenfalls bekannt und können verwendet werden.

### Polyharnstoff-Präpolmyere

Zur Herstellung von Polyharnstoff-Präpolymeren werden in an sich bekannter Art und Weise Polyamine mit ≥ 2 Amingruppen mit einem wohldefinierten Überschuss an di- oder polyfunktionellen Isocyanat-Verbindungen zu NCO-terminierten Harnstoff-Präpolymeren umgesetzt.
Polyharnstoff-Präpolymere sind jedoch im Rahmen der Erfindung gegenüber Polyurethan-Präpolymeren weniger bevorzugt, da sie zur Gelierung bei Raumtemperatur aufgrund von Wasserstoffbrückenbindungen neigen.

### AMINE

### Polyetherpolyamine

Als polymere Polyaminkomponente können vorzugsweise Verbindungen mit einer Funktionalität von 2 bis 4 eingesetzt werden, wobei insbesondere mehr als 50% der aktiven Wasserstoffatome von primären oder sekundären Aminen gebildet werden. Insbesondere werden genannt: Polyoxyalkylenamine wie bspw. Polyoxypropylendiamine, Polyoxyethylendiamine, Polytetramethylenetherdiamine, Polyoxypropylentriamine, Polyoxyethylentriamine (bekannt unter dem Handelsnamen Jeffamine® von Huntsman); sowie, falls aromatische Komponenten tolerabel für eine spezifische Anwendung sind: Polyethyleneglykol-di(p-aminobenzoat); Polyethyleneglykol-di(o-aminobenzoat); Polyethyleneglykol-di(m-aminobenzoat); Polytetramethyleneglykol-di(p-aminobenzoat); Polytetramethyleneglykol-di(o-aminobenzoat); Polytetramethyleneglykol-di(m-aminobenzoat). Als Polyamine können Polyethylenoxid-Polypropylenoxidpolyether eingesetzt werden, insbesondere mit einer Funktionalität von ungefähr zwei bis ungefähr drei und/oder mit einem Molekulargewicht von ungefähr 200g/mol bis ungefähr 6.000g/mol (beschrieben bspw. in US 4,433,067). Selbstverständlich können auch Mischungen Aminterminierter Polyether im Rahmen der Erfindung verwendet werden.

Vorzugsweise werden Polyoxyalkylendiamine mit einem mittleren Molekulargewicht im Bereich von etwa 150 g/mol bis etwa 7500 g/mol, vorzugsweise im Bereich von etwa 250 g/mol bis etwa 6000 g/mol eingesetzt.

### Amine als Kettenverlängerer

Im Rahmen der Erfindung können auch aminische Kettenverlängerer eingesetzt werden, vorzugsweise mit einem Molekulargewicht typischerweise kleiner als 400g/mol. Genannt werden insbesondere aliphatische Diamine, wie bspw. In US 4,246,363 und US 4,269,945 beschrieben. Ebenso kann ein kettenverlängerndes aliphatisches Diamin ausgewählt sein aus der Gruppe bestehend aus Ethylendiamin; Neopentandiamin; 1,2- und 1,3-Propandiamin; 1,6-Hexamethylendiamin; 1,8-Octamethylendiamin; 1,12-Dodecamethylendiamin; Cyclohexyldiamin; 4,4'-bis(para-aminocyclohexyl)methan; 2,2'-dimethyl-4,4'-methylenbis(cyclohexylamine) (Dimethyldicyclan); Isophorondiamin; 4,7-Dioxadecan-1,10-diamin; 4,7,10-Trioxadecan-1,13-diamin, Tetramethylethylendiamin; Pentamethyldiethylenetriamin; Dimethylcyclohexylamin; Tetramethyl-1,3-butandiamin; Pentamethyldipropylentriamin; bis-(Dimethylaminoethylether)triethylenglykoldiamin; 4,4'-Methylene-bis-(2-ethyl-6-methylcyclohexylamin) (M-MECA); 4,4'-Methylen-bis-(2,6-diethylcyclohexylamin) (MDECA); 4,4'-Bis(sek-butylamino)-dicyclohexylmethan (im Handel erhältlich als Clearlink® 1000) und Monomere davon; 3,3'-Dimethyl-4,4'-bis(sek-butylamino)-dicyclohexylmethane (im Handel erhältlich als Clearlink® 3000) und Monomere davon; N,N'-Diisopropylisophorondiamin (im Handel erhältlich als Jefflink® 754); Amine der Aspartamsäure wie z.B. s N,N'-Diethylmaleat-2-methylpentamethylendiamin (im Handel erhältlich als Desmophen® NH-1220), N,N'-Diethylmaleat-amino)-dicyclohexylmethan (im Handel erhältlich als Desmophen® NH-1420), und N,N'-Diethylmaleat-amino)-dimethyl-dicyclohexylmethan (im Handel erhältlich als Desmophen® NH-1520).

Auch aromatische Diamine (wie bspw. beschrieben in US 4,659,747) können im Rahmen der Erfindung als Kettenverlängerer eingesetzt werden, vorbehaltlich der vorstehend genannten Anforderungen an die Lichtbeständigkeit für bestimmte Anwendungen. Konkret werden genannt: Dimethylbenzylamin; Diethylbenzylamin; 1,2-Dimethylimidazol; 2-Methylimidazol; 1,2-, 1,3- oder 1,4-Bis(sek-butylamino)benzol (im Handel erhältlich als Unilink® 4100); 4,4'-Bis(sek-butylamino)-diphenylmethan (im Handel erhältlich als Unilink® 4200); Trimethylenglykol-di(p-aminobenzoat) (im Handel erhältlich als Versalink 740M); Trimethylenglykol-di(o-aminobenzoat); Trimethylenglykol-di(m-aminobenzoat); Polyethylenglykol-di(p-aminobenzoat); Polyethyleneglykol-di(o-aminobenzoat); Polyethylenglykol-di(m-aminobenzoat); Polytetramethylenglykol-di(p-aminobenzoat); Polytetramethyleneglykol-di(o-aminobenzoat); Polytetramethylenglykol-di(m-aminobenzoat); aromatische Diamine wie z.B. 3,5-Diethyl-2,4-toluoldiamin and 3,5-Diethyl-2,6-toluoldiamin (im Handel erhältlich als Ethacure® 100) und 3,5-Dimethylthio-2,4-toluoldiamin and 3,5-Dimethylthio-2,6-toluoldiamin (im Handel erhältlich als Ethacure® 300); 4,4'-Methylen-bis(2-chloroanilin); Diethylentriamine; Triethylentetramine; Tetraethylenpentamin; Methylendianilin (MDA); m-Phenylendiamin; Diethyltoluoldiamin; 4,4'-methylen-bis-3-(chloro-2,6-diethylbenzylamin) (MCDEA); Diethyltololdiamine (DETDA); 4,4'-Methylen-bis-(2-ethyl-6-methylaniline) (NMMEA); 4,4'-Methylen-bis-(2,6-diethylanilin) (MDEA); 4,4'-Methylen-bis-(2-isopropyl-6-methylanilin) (MMIPA); 4,4'-bis(sek-butylamino)diphenyl-methane; Phenylendiamine; Methylen-bisortho-chloroanilin (MBOCA); 4,4'-Methylene-bis-(2-methylanilin) (MMA); 4,4'-Methylen-bis-(2-chloro-6-ethylanilin) (MCEA);); 1,2-bis(2-aminophenylthio)ethan; N,N'-Di-alkyl-p-phenylendiamin; 4,4'-Methylen-bis(2,6-diisopropylanilin) (MDIPA); und Dimethylthiotoluoldiamin (2,4 und 2,6-Isomere) (DMTDA); 4-Chloro-3,5-diaminobenzoesäureisobutylester (CDABE) sowie Mischungen davon.

Das Mischungsverhältnis der vorgenannten Kettenverlängerer mit den Polyaminen kann vom Fachmann leicht in Routineversuchen abgestimmt werden auf das gewünschte Verhältnis von Hart- und Weichsegmenten. Hierbei sind die fachüblichen Anforderungen an die Mischbarkeit der Komponenten zu beachten.

Die vorstehend genannten primären Polyamine können im Rahmen der Erfindung fachüblich weiter modifiziert werden, bspw. mit Epoxiden (US 6,723,821), mit Acrylaten (über eine Michael-Addition, wie bspw. in US 5,359,123 und US 5,192,814 beschrieben) oder auch mit Alkoxysilanen (vorzugsweise mit Aminosilanen, wie bspw. in W002059224 beschrieben) sowie mit Isocyanatosilanen, Epoxy-Silanen oder Acrylato-Silanen.

Durch den Einbau der Alkoxysilylverbindungen in die Isocyanatund/ oder Amin-komponente können diese 2K Polyharnstoff Klebstoffe mit einem verbesserten Eigenschaftprofil hinsichtlich Haftung, Wasser-,oder Saüre-bestäntigkeit erhältlich.

Besonders bevorzugte Amine in der Komponente B sind Polyoxypropylendiamine, vorzugsweise mit einem mittleren Molekulargewicht von etwa 2000 g/mol (im Handel erhältlich bspw. unter dem Handelsnamen Jeffamine® D-2000 gemäss CAS 9046-10-0; Huntsman Corporation, Houston, Texas); primäre, verzweigte Polyethertriamine, vorzugsweise mit einem mittleren Molekulargewicht von etwa 5000 g/mol (im Handel erhältlich bspw. unter dem Handelsnamen Jeffamine® T-5000 gemäss CAS 64852-22-8; Huntsman Corporation, Houston, Texas (USA)); substituierte, insbesondere aromatische Diamine wie bspw. Diethyltoluylendiamin (im Handel erhältlich unter dem Handelsnamen Härter DT bzw. Härter VP LS 2214; Bayer AG, Leverkusen (DE)) oder N,N'-Dialkylaminodiphenylmethan (im Handel erhältlich unter dem Handelsnamen Unilink^{™} 4200 Diamine; UOP GmbH, Erkrath (DE)).

Die Funktionalität der NCO-terminierten Präpolymere, insbesondere der Urethanpräpolymere ist ≥ 1,7, vorzugsweise von 1,7 < f_{NCO} < 3, besonders bevorzugt im Bereich von 2 bis 3. Funktionalitäten > 2 erklären sich sowohl durch zusätzlich vorliegende, freie Isocyanate als auch durch Allophanatgruppen, welche durch Reaktion von Urethangruppen mit weiteren NCO-Einheiten entstehen können; derartige Präpolymere werden daher in der Fachwelt oftmals auch "Quasi-Präpolymere" genannt. Allophanatgruppen in Komponente A werden bei der weiteren Umsetzung mit Komponente B wieder in ein Urethan und freies Isocyanat gespalten.

Erfindungsgemäss beträgt das stöchiometrische Verhältnis von Isocyanatgruppen in Komponente A zu Amingruppen in Komponente B etwa 0,5 bis etwa 1,2, besonders bevorzugt etwa 1.

Über die Auswahl und ggf. Kombination verschiedener Di- oder Polyamine kann der Fachmann leicht in Routineversuchen wesentliche Eigenschaften des Zwei-Komponenten Klebstoffs ausschliesslich über die Komponente B einstellen, wie z.B. die Elastizität, Wasserfestigkeit, Reaktionsgeschwindigkeit, etc.; die Komponente A kann hingegen beibehalten werden, was sowohl produktionsseitig beim Hersteller als auch in der Bereitstellung beim Verbraucher erhebliche Flexibilität ermöglicht (System mit verschiedenen Komponenten B, siehe unten).

Die erfindungsgemässen Zusammensetzungen können selbstverständlich die fachüblichen weiteren Additive enthalten, wie sie in der Polyurethan/Polyharnstoffindustrie allgemein üblich sind. Zum Beispiel: Weichmacher, beispielsweise Ester organischer Carbonsäuren oder deren Anhydride, Phthalate, wie beispielsweise Dioctylphthalat oder Diisodecylphthalat, Adipate, wie zum Beispiel Dioctyladipat, Sebacate, organische Phosphor-und Sulfonsäureester, Polybutene und andere, mit Isocyanaten nicht reagierende Verbindungen; Lösemittel; anorganische und organische Füllstoffe, wie zum Beispiel gemahlene oder gefällte Calciumcarbonate, welche gegebenenfalls mit Stearaten beschichtet sind, Russe, Kaoline, Aluminiumoxide, Kieselsäuren und PVC-Pulver; Fasern, beispielsweise aus Polyethylen oder aus Polyamide; Pigmente; Rheologie-Modifizierer wie beispielsweise Verdickungsmittel, zum Beispiel Harnstoffverbindungen, Polyamidwachse, Bentonite oder pyrogene Kieselsäuren; Haftvermittler, insbesondere Silane wie Vinylsilane, Isocyanatosilane in der Isocyanatekomponente und mit Aldehyden zu Aldiminosilanen umgesetzte Aminosilane in der Aminekomponente; Trocknungsmittel wie beispielsweise p-Tosylisocyanat und andere reaktive Monoisocyanate, Vinyl Trimethoxysilan, Orthoameisensäureester, Calciumoxid oder Molekularsiebe (z.B. Zeolite); Stabilisatoren gegen Wärme, Licht- und UV-Strahlung; flammhemmende Substanzen; oberflächenaktive Substanzen wie beispielsweise Netzmittel, Verlaufsmittel, Entlüftungsmittel oder Entschäumer; Fungizide oder das Pilzwachstum hemmende Substanzen; sowie weitere, in der Polyurethanindustrie üblicherweise eingesetzte Substanzen.

Bezüglich solcher Additive wird verwiesen auf Polyurethane Handbook 2nd edition, Günter Oertel (Editor), Hanser Publishers Munich 1994, Seiten 98 bis 128, dessen Offenbarung hinsichtlich fachüblicher Additive wird hiermit durch Bezugnahme in die Offenbarung der vorliegenden Erfindung eingeschlossen.

Mit vorstehend genannten Zwei-Komponenten Klebstoffen können ohne weiteres diverse Normenvorgaben im Holzbau, bspw. bei der Verarbeitung von Buchenholz erfüllt werden, bspw.:
- eine Verbundfestigkeit C1 gemäss DIN EN 12765 (passgenaue Fuge) von ≥ 10N/mm², vorzugsweise von ≥ 12N/mm²; und/oder
- eine Verbundfestigkeit C1 gemäss DIN EN 12765 (0,5mm Fuge) von ≥ 7,5N/mm², vorzugsweise von ≥ 9N/mm²; und/oder
- eine Wasserfestigkeit C3 (Lagerfolge 3) gemäss DIN EN 12765 (passgenaue Fuge) von ≥ 4N/mm², vorzugsweise von ≥ 5N/mm²; und/oder
- eine Wasserfestigkeit C3 gemäss DIN EN 12765 (0,5mm Fuge) von ≥ 3N/mm², vorzugsweise von ≥ 4N/mm²; und/oder
- eine Wärmefestigkeit gemäss DIN EN 14257 (passgenaue Fuge) von ≥ 7N/mm², vorzugsweise von ≥ 9N/mm².

Die Erfindung betrifft weiters ein Verfahren zum Verkleben von Holzwerkstoffen insbesondere im konstruktiven Holzbau, umfassend das Auftragen eines vorstehend beschriebenen Zwei-Komponenten Klebstoffs auf wenigstens eines der zu verbindenden Substrate. Als weitere Substrate kommen vorrangig in Betracht: Metalle, Glas, Keramik, Kunststoffe, Textilien. Besonders vorteilhaft kann mit den erfindungsgemässen Zusammensetzungen Glas verklebt werden, wie vorstehend dargelegt, weil unter insbesondere vollständigem Verzicht auf aromatische Bestandteile eine hervorragende Lichtechtheit erzielt werden kann, unter zusätzlicher Beschleunigung der Reaktion gegenüber bekannten Polyurethan-Systemen.

Ein weiterer Aspekt der vorliegenden Erfindung betrifft ein Verfahren zur Herstellung eines Zwei-Komponenten Klebstoffs, umfassend eine isocyanathaltige Komponente A und eine aminhaltige Komponente B, wobei
- die Komponente A ein Isocyanat-terminiertes Präpolymer mit einer Isocyanat-Funktionalität von ≥ 1,7, vorzugsweise von 1,7 < f_{NCO} < 3, besonders bevorzugt im Bereich von 2 bis 3; und
- die Komponente B wenigstens ein Di- und/oder Polyamin, vorzugsweise ein Polyetherdiamin und/oder Polyetherpolyamin enthält,
und wobei das stöchiometrische Verhältnis von Isocyanatgruppen in Komponente A zu Amingruppen in Komponente B auf etwa 0,5 bis etwa 1,2, besonders bevorzugt etwa 1 eingestellt wird.

Die Erfindung betrifft also in einem weiteren Aspekt die Verwendung einer isocyanathaltigen Komponente A und einer aminhaltigen Komponente B, wobei
- die Komponente A ein Isocyanat-terminiertes Präpolymer mit mindestens zwei Isocyanatgruppen, insbesondere ein Polyurethan-Präpolymer enthält; und
- die Komponente B wenigstens ein Di- und/oder Polyamin, vorzugsweise ein Polyetherdiamin und/oder Polyetherpolyamin enthält,
als Zwei-Komponenten Klebstoff insbesondere zur Verklebung von Holzwerkstoffen, mit einem stöchiometrischen Verhältnis von Isocyanatgruppen in Komponente A zu Amingruppen in Komponente B von etwa 0,5 bis etwa 1,2, vorzugsweise etwa 1. Eine derartige Verwendung dieser beiden Komponenten ist im Stand der Technik bislang nicht vorgeschlagen worden; die überraschenden, vorteilhaften Eigenschaften bei der Verwendung als Zwei-Komponenten Klebstoff insbesondere bei der Verklebung von Holzwerkstoffen sind vorstehend beschrieben.

Die Erfindung betrifft weiters einen Verbund aus Bauteilen, insbesondere Bauelementen für den konstruktiven Holzbau, wobei der Verbund im wesentlichen bewirkt ist durch einen Zwei-Komponenten Klebstoff wie vorstehend beschrieben.

Darüber hinaus betrifft die Erfindung in einem weiteren Aspekt ein System zur individualisierten Bereitstellung eines Zwei-Komponenten Klebstoffs zur Verklebung von Holzwerkstoffen, umfassend
- zumindest eine Komponente A, enthaltend ein Isocyanat-terminiertes Präpolymer(oder ein Gemisch von Präpolymeren) mit einer Isocyanat-Funktionalität von ≥ 1,7, vorzugsweise von 1,7 < f_{NCO} < 3, besonders bevorzugt im Bereich von 2 bis 3; und
- wenigstens zwei alternative Komponenten B, die jeweils wenigstens ein unterschiedliches Di- und/oder Polyamin, vorzugsweise ein Polyetherdiamin und/oder Polyetherpolyamin enthalten, mit einem stöchiometrischen Verhältnis von Isocyanatgruppen in Komponente A zu Amingruppen in Komponente B etwa 0,5 bis etwa 1,2, vorzugsweise etwa 1.

Mittels eines solchen Systems (im Sinne einer geordneten Bereitstellung zur gemeinsamen Verwendung (kit-of-parts)) kann ein erfindungsgemässer Zwei-Komponenten Klebstoff überraschend einfach und flexibel ausschliesslich über die anwendungsspezifisch, verbraucherseitig zu wählende Komponente B individualisiert bereitgestellt werden.

Die Erfindung wird nachfolgend anhand von Ausführungsbeispielen näher erläutert, ohne dass der Gegenstand der Erfindung auf diese Ausführungsformen zu beschränken wäre.

Als Komponente A wurde Desmodur® E23 der Bayer AG (Leverkusen, DE) eingesetzt.

In den nachfolgend detaillierter beschriebenen Zusammensetzungen wurden die folgenden Mischungen als Komponenten B (Viskosität Brookfield 20°C: ca. 250 mPa*s) eingesetzt:

| **Kurzbezeichnung:** | **M3** | **M 320** | **M 323** |
|---|---|---|---|
| | | | |
| Jeffamine D-2000 | 21,25 | 21,25 | 21,25 |
| Jeffamine T-5000 | 3,75 | 3,75 | 3,75 |
| Unilink 4200 | 75 | 65 | 70 |
| Härter DT | - | 10 | 5 |
| | | | |
| Total | 100,00 | 100,00 | 100,00 |

| | | | |
|---|---|---|---|
| (Angaben jeweils in g) | | | |

Die folgenden Zwei-Komponenten Klebstoffe wurden hergestellt:

### Beispiel 1:

| | | | |
|---|---|---|---|
| Desmodur® E23 + M3 | | | |
| Mischungsverhältnis: | (Vol.) 100 : | 74,2, | |
| | (Gew.) 100 : | 65,7 | |
| Topfzeit von 20 g der Mischung im Labor: | | | 2 Min. |
| Topfzeit bei maschinellem Mischen: | | | 1 Min. 15 sec. |

### Beispiel 2:

| | | | |
|---|---|---|---|
| Desmodur® E23 + M323 | | | |
| Mischungsverhältnis: | (Vol.) 100 : | 71,0, | |
| | (Gew.) 100 : | 62,8 | |
| Topfzeit von 20 g der Mischung im Labor: | | | 1 Min. 05 sec. |
| Topfzeit bei maschinellem Mischen: | | | 30 - 35 sec. |

### Beispiel 3:

| Desmodur® E23 + M320 | | |
|---|---|---|
| Mischungsverhältnis: | (Vol.) 100 : | 67,9, |
| | (Gew.) 100 : | 60,1 |
| Topfzeit von 20 g der Mischung im Labor: | | 1 Min. |
| Topfzeit bei maschinellem Mischen: | | 20 - 25 sec. |

Die folgenden Verklebungen (Buchenholz) wurden mit den vorgenannten Zwei-Komponenten Klebstoffen durchgeführt und analysiert:

| | | **Bsp. 1** | **Bsp. 2** | **Bsp. 3** |
|---|---|---|---|---|
| **C1 EN 12765** | (Soll ≥ 10 N/mm²) | | | |
| passgenau | Reisswert | **12,7 N/mm²** | **13,1 N/mm²** | **11,6 N/mm²** |
| | Bruchbild | 100% MB | 100% MB | 100% MB |
| | | | | |
| Fuge 0,5mm | Reisswert | **8,8 N/mm²** | **9,2 N/mm²** | **Nicht** |
| | Bruchbild | 100% MB | 100% MB | ermittelt |
| **C3 EN 12765** | (Soll ≥ 4 N/mm²) | | | |
| passgenau | Reisswert | **4,6 N/mm²** | **4,4 N/mm²** | **3,8 N/mm²** |
| | Bruchbild | 100% AB | 100% AB | 100% AB |
| | | | | |
| Fuge 0, 5mm | Reisswert | **5,42 N/mm²** | **2,96 N/mm²** | Nicht |
| | Bruchbild | 100% AB | 100% AB | ermittelt |
| **EN 14257** | (Soll ≥ 7 N/mm²) | | | |
| 1h bei 80°C | Reisswert | **8,3 N/mm²** | **9,2 N/mm²** | **9,0 N/mm²** |
| | Bruchbild | 95% AB | 40% AB | 70% AB |
| | | 5% MB | 60% MB | 30% MB |
| **Kältelagerung** | | | | |
| 24h bei 20°C, kalt gerissen | | | | |
| Reisswert | | **11,2 N/mm²** | **12,1 N/mm²** | **12,0 N/mm²** |
| | | 95% MB | 85% MB | 100% MB |
| Bruchbild | | 5% KB | 15% AB | |
| **HDF - HDF C1 EN 12765** | | | | |
| Passgenau | Reisswert | **3,6 N/mm²** | **3,9 N/mm²** | Nicht |
| | Bruchbild | 100% MB | 100% MB | ermittelt |

### Hierbei bedeuten

- HDF:: hochdichte Faserplatte (Pavatex Homadur roh, 5mm, beidseitig geschliffen);
- EN 14257:: DIN EN 14257, Ausgabe September 2006;
- EN 12765:: DIN EN 12765, Ausgabe September 2001;
- MB:: Materialbruch;
- KB:: Kohäsionsbruch der Klebstoffschicht;
- AB:: Adhäsionsbruch zwischen Klebstoff und Substrat.

Die erfindungsgemässen Zwei-Komponenten Klebstoffe zeigen nicht nur auf Holz hervorragende Klebeeigenschaften. Auch auf Glas und Alu werden gute Festigkeiten erhalten, wie die folgenden Beispiele zeigen:

| **Kurzbezeichnung:** | **M16** | **M16b** | **M6** | **M7** |
|---|---|---|---|---|
| | | | | |
| Jeffamine D-2000 | 21,25 | 11,58 | 21,25 | 12,50 |
| Jeffamine T-5000 | | | 3,75 | 12,50 |
| Unilink 4200 | 37,50 | 20,44 | 37,50 | 75,00 |
| Härter DT | 37,50 | 20,44 | 37,50 | |
| Jeffamine T-403 | 3,75 | 2,04 | | |
| Aerosil R 202 | | 0,50 | | |
| Siliporite SA 1720 | | 5,00 | | |
| Millicarb | | 40,00 | | |

mit (soweit nicht bereits vorne angegeben)
- Desmodur® E 305:: weitgehend lineares NCO-Prepolymer auf Basis Hexamethylendiisocyanat und einem Etherdiol, Bayer;
- Jeffamine® T-403:: Polyoxypropylentriamin (CAS 39423-51-3), Huntsman;
- Aerosil® R 202:: synthetisches, hydrophobes Siliziumdioxid, Degussa;
- Siliporite® SA1720:: Molekularsieb (Alkali- und Erdalkali- Aluminiumsilikat; Zeolith des Typs A), CECA, Arkema Group;
- Millicarb®-OG:: Natürliches, sehr feines und leicht dispergierbares CaCO₃ in Pulverform, hergestellt aus einem reinen, weissen Kalkstein, Omya AG

| **Komp. A** | **Desmodur E305** | **Desmodur E305** | **Desmodur E305** | **Desmodur E23** |
|---|---|---|---|---|
| **Komp. B** | **M 16** | **M 16b** | **M 6** | **M 7** |
| | | | | |
| Mischungsverh. Gew. | 100 : 39,2 | 100 : 71,8 | 100 : 40,5 | 100 : 66,1 |
| Mischungsverh. Vol. | 100: 42,7 | 100: 78,3 | 100 : 44,1 | 100 : 74,7 |
| Topfzeit | ca. 2 Min 30 | ca. 2 Min 25 | ca. 2 Min | ca. 2 Min 30 |
| Zugscherfest. Alu 21d | 12,8; AB | 18,2; 30% KB | 11,8; AB | 7,9; AB |
| Zugscherfest. Glas 21d | > 6; MB | 5.1; AB | > 6; MB | > 6; MB |
| Zugscherfest. Holz 21d | 13,2; 75% H | 10,3; 100% H | 12,7; 70% H | 12,6; 60% H |

| | | | | |
|---|---|---|---|---|
| Festigkeitsangaben in MPa H: Holzausriss Prüfmittel: Zugprüfmaschine Instron 5567; Zuggeschwindigkeit 50mm/Min. | | | | |

Diese Versuche zeigen, dass die landläufige Auffassung, dass sich mit extrem schnell abreagierenden Klebstoffen keine ausreichend belastbaren Verklebungen erzielen lassen, nicht zutrifft. Überraschenderweise werden die einschlägigen Normen mit den erfindungsgemässen Zwei-Komponenten Klebstoffen erfüllt, sogar teilweise deutlich übertroffen.

## Patentansprüche

1. zwei-Komponenten Klebstoff zur Verklebung von Holzwerkstoffen, umfassend eine isocyanathaltige Komponente A und eine aminhaltige Komponente B, wobei
- die Komponente A ein Isocyanat-terminiertes Präpolymer mit einer Isocyanat-Funktionalität von ≥ 1,7, vorzugsweise von 1,7 < f_{NCO} < 3, besonders bevorzugt im Bereich von 2 bis 3; und
- die Komponente B wenigstens ein Di- und/oder Polyamin, vorzugsweise ein Polyetherdiamin und/oder Polyetherpolyamin enthält, und wobei das stöchiometrische Verhältnis von Isocyanatgruppen in Komponente A zu Amingruppen in Komponente B 0,5 bis 1,2, besonders bevorzugt 1 beträgt.

2. Zwei-Komponenten Klebstoff gemäss Anspruch 1, **dadurch gekennzeichnet dass** es sich bei dem Isocyanat-terminierten Präpolymer in Komponente A um ein Polyurethan-Präpolymer handelt.

3. Zwei-Komponenten Klebstoff gemäss einem der Ansprüche 1 bis 2, weiter enthaltend ein oder mehrere Additiv(e) ausgewählt aus der Gruppe bestehend aus Weichmachern; Lösemitteln; anorganische und organische Füllstoffe Fasern; Pigmente; Rheologie-Modifizierer; Trocknungsmittel; Stabilisatoren gegen Wärme, Licht- und UV-Strahlung; flammhemmende Substanzen; Netzmittel; Verlaufsmittel; Entlüftungsmittel; Entschäumer; Fungizide oder das Pilzwachstum hemmende Substanzen; und Mischungen davon.

4. Zwei-Komponenten Klebstoff gemäss einem der Ansprüche 1 bis 3, **dadurch gekennzeichnet, dass** bei der Verbindung von Holz, insbesondere Buchenholz
- eine Verbundfestigkeit C1 gemäss DIN EN 12765 (passgenaue Fuge) von ≥ 10N/mm², vorzugsweise von ≥ 12N/mm²; und/oder
- eine Verbundfestigkeit C1 gemäss DIN EN 12765 (0,5mm Fuge) von ≥ 7,5N/mm², vorzugsweise von ≥ 9N/mm²; und/oder
- eine Wasserfestigkeit C3 (Lagerfolge 3) gemäss DIN EN 12765 (passgenaue Fuge) von ≥ 4N/mm², vorzugsweise von ≥ 5N/mm²; und/oder
- eine Wasserfestigkeit C3 gemäss DIN EN 12765 (0,5mm Fuge) von ≥ 3N/mm², vorzugsweise von ≥ 4N/mm²; und/oder
- eine Wärmefestigkeit gemäss DIN EN 14257 (passgenaue Fuge) von ≥ 7N/mm², vorzugsweise von ≥ 9N/mm²
erhältlich ist.

5. verfahren zum Verkleben von Holzwerkstoffen insbesondere im konstruktiven Holzbau, umfassend das Auftragen eines Zwei-Komponenten Klebstoffs gemäss einem der Ansprüche 1 bis 4 auf wenigstens eines der zu verbindenden Substrate.

6. Verfahren zur Herstellung eines Zwei-Komponenten Klebstoffs, umfassend eine isocyanathaltige Komponente A und eine aminhaltige Komponente B, wobei
- die Komponente A ein Isocyanat-terminiertes Präpolymer mit einer Isocyanat-Funktionalität von ≥ 1,7, vorzugsweise von 1,7 < f_{NCO} < 3, besonders bevorzugt im Bereich von 2 bis 3; und
- die Komponente B wenigstens ein Di- und/oder Polyamin, vorzugsweise ein Polyetherdiamin und/oder Polyetherpolyamin enthält,
**dadurch gekennzeichnet, dass** das stöchiometrische Verhältnis von Isocyanatgruppen in Komponente A zu Amingruppen in Komponente B auf etwa 0,5 bis etwa 1,2, besonders bevorzugt etwa 1 eingestellt wird.

7. Verwendung einer isocyanathaltigen Komponente A und einer aminhaltigen Komponente B, wobei
- die Komponente A ein Isocyanat-terminiertes Polyurethan-Präpolymer mit mindestens zwei Isocyanatgruppen enthält; und
- die Komponente B wenigstens ein Di- und/oder Polyamin, vorzugsweise ein Polyetherdiamin und/oder Polyetherpolyamin enthält,
als Zwei-Komponenten Klebstoff zur Verklebung von Holzwerkstoffen, Metallen, Glas, Keramik, Kunststoffen, Textilien, vorzugsweise von Holzwerkstoffen, wobei das stöchiometrische Verhältnis von Isocyanatgruppen in Komponente A zu Amingruppen in Komponente B etwa 0,5 bis etwa 1,2, besonders bevorzugt etwa 1 beträgt.

8. Verbund aus Bauteilen, insbesondere Bauelementen für den konstruktiven Holzbau, wobei der Verbund im wesentlichen bewirkt ist durch einen zwei-Komponenten Klebstoff gemäss einem der Ansprüche 1 bis 4.

9. System zur individualisierten Bereitstellung eines Zwei-Komponenten Klebstoffs insbesondere zur Verklebung von Holzwerkstoffen, umfassend
- zumindest eine Komponente A, enthaltend ein Isocyanat-terminiertes Präpolymer mit einer Isocyanat-Funktionalität von ≥ 1,7, vorzugsweise von 1,7 < f_{NCO} < 3, besonders bevorzugt im Bereich von 2 bis 3; und
- wenigstens zwei alternative Komponenten B, die jeweils wenigstens ein unterschiedliches Di- und/oder Polyamin, vorzugsweise ein Polyetherdiamin und/oder Polyetherpolyamin enthalten, wobei das stöchiometrische Verhältnis von Isocyanatgruppen in Komponente A zu Amingruppen in Komponente B etwa 0,5 bis etwa 1,2, besonders bevorzugt etwa 1 beträgt.

## Claims

1. Two-component adhesive for bonding wood materials, comprising an isocyanate-comprising component A and an amine-comprising component B,
- component A comprising an isocyanate-terminated prepolymer having an isocyanate functionality of ≥ 1.7, preferably of 1.7 < f_{NCO} < 3, more preferably in the range from 2 to 3; and
- component B comprising at least one diamine and/or polyamine, preferably a polyetherdiamine and/or polyetherpolyamine, and the stoichiometric ratio of isocyanate groups in component A to amine groups in component B being 0.5 to 1.2, more preferably 1.

2. Two-component adhesive according to Claim 1, **characterized in that** the isocyanate-terminated prepolymer in component A is a polyurethane prepolymer.

3. Two-component adhesive according to either of Claims 1 to 2, further comprising one or more additives selected from the group consisting of plasticizers; solvents; organic and inorganic filler materials; fibres; pigments; rheology modifiers; desiccants; heat, light and UV radiation stabilizers; flame retardants; wetting agents; flow control agents; devolatilizers; defoamers; fungicides or fungal growth inhibitors; and mixtures thereof.

4. Two-component adhesive according to any one of Claims 1 to 3, **characterized in that**, when joining wood, more particularly beech, it is possible to obtain
- a bond strength C1 according to DIN EN 12765 (precise-fit joint) of ≥ 10N/mm², preferably of ≥ 12N/mm²; and/or
- a bond strength C1 according to DIN EN 12765 (0.5mm joint) of ≥ 7.5N/mm², preferably of ≥ 9N/mm²; and/or
- a water resistance C3 (conditioning sequence 3) according to DIN EN 12765 (precise-fit joint) of ≥ 4N/mm², preferably of ≥ 5N/mm²; and/or
- a water resistance C3 according to DIN EN 12765 (0.5mm joint) of ≥ 3N/mm², preferably of ≥ 4N/mm²; and/or
- a heat resistance according to DIN EN 14257 (precise-fit joint) of ≥ 7N/mm², preferably of ≥ 9N/mm².

5. Method of bonding wood materials, more particularly in structural wood construction, comprising the application of a two-component adhesive according to any one of Claims 1 to 4 to at least one of the substrates to be joined.

6. Method of producing a two-component adhesive comprising an isocyanate-comprising component A and an amine-comprising component B, wherein
- component A comprises an isocyanate-terminated prepolymer having an isocyanate functionality of ≥ 1.7, preferably of 1.7 < f_{NCO} < 3, more preferably in the range from 2 to 3; and
- component B comprises at least one diamine and/or polyamine, preferably a polyetherdiamine and/or polyetherpolyamine,
**characterized in that** the stoichiometric ratio of isocyanate groups in component A to amine groups in component B is set to about 0.5 to about 1.2, more preferably about 1.

7. Use of an isocyanate-comprising component A and an amine-comprising component B, wherein
- component A comprises an isocyanate-terminated polyurethane prepolymer having at least two isocyanate groups; and
- component B comprises at least one diamine and/or polyamine, preferably a polyetherdiamine and/or polyetherpolyamine,
as a two-component adhesive for bonding wood materials, metals, glass, ceramics, plastics, textiles, preferably wood materials, the stoichiometric ratio of isocyanate groups in component A to amine groups in component B being about 0.5 to about 1.2, more preferably about 1.

8. Assembly of components, more particularly construction members for structural wood construction, the assembly having been produced substantially by means of a two-component adhesive according to any one of Claims 1 to 4.

9. System for the individualized provision of a two-component adhesive more particularly for the bonding of wood materials, comprising
- at least one component A, comprising an isocyanate-terminated prepolymer having an isocyanate functionality of ≥ 1.7, preferably of 1.7 < f_{NCO} < 3, more preferably in the range from 2 to 3; and
- at least two alternative components B, each comprising at least one different diamine and/or polyamine, preferably a polyetherdiamine and/or polyether-polyamine, the stoichiometric ratio of isocyanate groups in component A to amine groups in component B being about 0.5 to about 1.2, more preferably about 1.

## Revendications

1. Adhésif bicomposant pour le collage de matériaux à base de bois, comprenant un composant comprenant un isocyanate A et un composant comprenant une amine B,
- le composant A contenant un prépolymère à terminaison isocyanate ayant une fonctionnalité isocyanate ≥ 1,7, de préférence de 1,7 < f_{NCO} < 3, de manière particulièrement préférée dans la plage allant de 2 à 3 ; et
- le composant B contenant au moins une di- et/ou polyamine, de préférence une polyétherdiamine et/ou une polyétherpolyamine, et le rapport stoechiométrique entre les groupes isocyanate dans le composant A et les groupes amine dans le composant B étant de 0,5 à 1,2, de manière particulièrement préférée de 1.

2. Adhésif bicomposant selon la revendication 1, **caractérisé en ce que** le prépolymère à terminaison isocyanate dans le composant A est un prépolymère de polyuréthane.

3. Adhésif bicomposant selon l'une quelconque des revendications 1 à 2, contenant également un ou plusieurs additifs choisis dans le groupe constitué par les plastifiants ; les solvants ; les charges inorganiques et organiques ; les fibres ; les pigments ; les modificateurs de rhéologie ; les agents siccatifs ; les stabilisateurs contre la chaleur, la lumière et les rayonnements UV ; les substances ignifuges ; les agents mouillants ; les agents d'écoulement ; les exhausteurs ; les agents antimousse ; les fongicides ou les substances inhibant la croissance des champignons ; et leurs mélanges.

4. Adhésif bicomposant selon l'une quelconque des revendications 1 à 3, **caractérisé en ce que** lors de la liaison de bois, notamment de bois de hêtre,
- une résistance d'adhésion C1 selon DIN EN 12765 (ajusté) ≥ 10 N/mm², de préférence ≥ 12 N/mm² ; et/ou
- une résistance d'adhésion C1 selon DIN EN 12765 (espace de 0,5 mm) ≥ 7,5 N/mm², de préférence ≥ 9 N/mm² ; et/ou
- une résistance à l'eau C3 (séquence 3) selon DIN EN 12765 (ajusté) ≥ 4 N/mm², de préférence ≥ 5 N/mm² ; et/ou
- une résistance à l'eau C3 selon DIN EN 12765 (espace de 0,5 mm) ≥ 3 N/mm², de préférence ≥ 4 N/mm² ; et/ou
- une résistance à la chaleur selon DIN EN 14257 (ajusté) de ≥ 7 N/mm², de préférence ≥ 9 N/mm² peuvent être obtenues.

5. Procédé de collage de matériaux à base de bois, notamment dans la construction en bois, comprenant l'application d'un adhésif bicomposant selon l'une quelconque des revendications 1 à 4 sur au moins un des substrats à relier.

6. Procédé de fabrication d'un adhésif bicomposant, comprenant un composant comprenant un isocyanate A et un composant comprenant une amine B,
- le composant A comprenant un prépolymère à terminaison isocyanate ayant une fonctionnalité isocyanate ≥ 1,7, de préférence de 1,7 < f_{NCO} < 3, de manière particulièrement préférée dans la plage allant de 2 à 3 ; et
- le composant B comprenant au moins une di- et/ou polyamine, de préférence une polyétherdiamine et/ou une polyétherpolyamine,
**caractérisé en ce que** le rapport stoechiométrique entre les groupes isocyanate dans le composant A et les groupes amine dans le composant B est ajusté à une valeur d'environ 0,5 à environ 1,2, de manière particulièrement préférée d'environ 1.

7. Utilisation d'un composant comprenant un isocyanate A et d'un composant comprenant une amine B,
- le composant A comprenant un prépolymère de polyuréthane à terminaison isocyanate qui contient au moins deux groupes isocyanate ; et
- le composant B comprenant au moins une di- et/ou polyamine, de préférence une polyétherdiamine et/ou une polyétherpolyamine,
en tant qu'adhésif bicomposant pour le collage de matériaux à base de bois, de métaux, de verre, de céramique, de plastiques, de textiles, de préférence de matériaux à base de bois, le rapport stoechiométrique entre les groupes isocyanate dans le composant A et les groupes amine dans le composant B étant d'environ 0,5 à environ 1,2, de manière particulièrement préférée d'environ 1.

8. Composite d'éléments de construction, notamment d'éléments de construction pour la construction en bois, le composite étant principalement obtenu par un adhésif bicomposant selon l'une quelconque des revendications 1 à 4.

9. Système pour la préparation individualisée d'un adhésif bicomposant, notamment pour le collage de matériaux à base de bois, comprenant
- au moins un composant A, comprenant un prépolymère à terminaison isocyanate ayant une fonctionnalité isocyanate ≥ 1,7, de préférence de 1,7 < f_{NCO} < 3, de manière particulièrement préférée dans la plage allant de 2 à 3 ; et
- au moins deux composants B alternatifs, qui comprenne chacun au moins une di- et/ou polyamine différente, de préférence une polyétherdiamine et/ou une polyétherpolyamine, le rapport stoechiométrique entre les groupes isocyanate dans le composant A et les groupes amine dans le composant B étant d'environ 0,5 à environ 1,2, de manière particulièrement préférée d'environ 1.
